# EUROPEAN PATENT APPLICATION

(11) **EP 1 755 244 A2**
(43) Date of publication of application: **21.02.2007**
(21) Application number: 06118845.4
(22) Date of filing: 11.08.2006
(51) Int. Cl.: H04H 1/00

(54) **Digital broadcasting system**

(30) Priority: 18.08.2005 KR 20050075891
(71) Applicant: Samsung Electronics Co., Ltd., Suwon-si, Gyeonggi-Do (KR)
(72) Inventor: Choe, Hyun-chul, Yeongtong-gu, Suwon-si, Gyeonggi-do (KR); Chang, Hye-youngkr, Gangseo-gu, Seoul (KR)
(74) Representative: Read, Matthew Charles

(57) **Abstract**

Methods and apparatuses for downloading software from a digital broadcasting system to a broadcasting signal receiving device are provided. A broadcasting signal is transmitted by a broadcasting base station that includes software update data and medium information to access another provision medium that provides the software update data. The broadcasting signal is received by the broadcasting signal receiving device and updateable software and the medium information are extracted if the updateable software exists in the broadcasting signal. The extracted medium information is stored and a download of the extracted software is started. The download of the extracted software is monitored and re-downloading the software may be performed if the download is abnormal. Thus, downloading of the software may be performed through other reception paths if an operation of downloading the software through a broadcasting signal is not normally performed.

## Description

The present invention relates to a method of downloading software in a digital broadcasting system, and more particularly, but not exclusively, to a digital broadcasting system which is capable of updating the software if an operation of downloading the software from a broadcasting signal is not performed normally, and a broadcasting signal receiving device and a software downloading method thereof.

As digital broadcasting has become increasingly widespread, demand for digital television (TV) is on the rise. Unlike analog broadcasting systems, a digital broadcasting system converts a video signal and an audio signal into a digital signal before compression and packetization of the digital signal for transmission as a transport stream.

The digital TV stores various system software related to an operation of the digital TV, such as electric program guide (EPG) information that includes channel information, in a memory (e.g., a flash memory or an EEPROM) within a digital TV set. The system software related to the operation of the digital TV should be updated to keep pace with development of the digital broadcasting system.

Hereinafter, a process of updating the digital TV software in a conventional digital broadcasting system will be described. Conventionally, a broadcasting base station includes additional information, such as program specific information (PSI), service information (SI), and various software for updating the digital TV, in a packet of the broadcast signal transport stream to be transmitted. The broadcasting base station divides the software into binary data information (hereinafter, to be referred to as binary data) suitable for the transport stream to be transmitted. Thus, the digital TV extracts the corresponding binary data if the received broadcasting signal is determined to include valid software for updating the digital TV in consideration of the model group of the digital TV, i.e., product information and version information of the software currently installed on the digital TV, through digital storage media command & control (DSM-CC) based on PSI and/or SI of the broadcasting signal received from the broadcasting base station. Thus, the digital TV may newly update the system software corresponding to the downloaded binary data.

However, the conventional digital broadcasting system may not update the software of the digital TV if the downloading operation is not performed normally, such as when there are errors in the software information (binary data) that is extracted from the broadcasting signal to be downloaded or when power to the digital TV is interrupted during downloading.

That is, the conventional digital broadcasting system may not properly update the software if the operation of downloading the software information (binary data) is not performed normally.

According to an aspect of the present invention, there is provided a method of downloading software according to claim 1.

According to another aspect of the present invention, there is provided a broadcasting signal receiving device according to claim 18.

According to another aspect of the present invention there is provided a software downloading method of a digital broadcasting system which arranges further access to the software if an operation of downloading the software from a broadcasting signal is not performed normally.

The further access to the software may be in the form of downloading software through other reception paths.

The further access to the software may also be in the form of arranging a retransmission of the broadcasting signal from a broadcasting base station.

According to another aspect of the present invention there is provided a software downloading method of a digital broadcasting system which downloads software through other reception paths if an operation of downloading the software from a broadcasting signal is not performed normally.

According to another aspect of the present invention, there is provided a software downloading method of a digital broadcasting system to download software for a broadcasting signal receiving device, comprising transmitting, by a broadcasting base station, a broadcasting signal which includes software update data and medium information of at least one provision medium other than the broadcasting base station, the at least one provision medium providing the software update data included in the broadcasting signal in response to the medium information; receiving, by the broadcasting signal receiving device, the broadcasting signal which is transmitted by the broadcasting base station and determining whether the software update data which is included in the broadcasting signal corresponds to the broadcasting signal receiving device; extracting the software update data and the medium information if the software update data is determined to correspond to the broadcasting signal receiving device; storing the extracted medium information and initiating a download of the extracted software update data; determining whether the download of the software update data which is initiated is abnormally performed; and obtaining the software update data from the at least one other provision medium by using the medium information which is stored if the download of the software update data is determined to be abnormally performed.

According to another aspect of the present invention, the medium information refers to information to access another provision medium providing the software update data other than the broadcasting base station, and comprises at least one of uniform resource locator (URL) information of an Internet site which can provide the software update data, modem number information of a modem server which can provide the software update data and password information which accesses a USB card which can provide the software update data.

According to another aspect of the present invention, the extracting the software update data and the medium information comprises determining whether the broadcasting signal includes the software update data which corresponds to the broadcasting signal receiving device based on service information of the broadcasting signal which is received, determining a type of the software update data in the broadcasting signal based on the service information if the software update data included in the broadcasting signal is determined to correspond to the broadcasting signal receiving device, and extracting the software update data and the medium information to access the at least one other provision medium which provides the software update data.

According to another aspect of the present invention, the obtaining the software update data from the at least one other provision medium comprises monitoring the download of the software update data, accessing the at least one other provision medium which provides the software update data other than the broadcasting base station by using the medium information which is stored if the download of the software update data which is monitored is determined to be abnormally performed, and receiving the software update data from the at least one other provision medium which is accessed and storing the software update data which is received from the at least one other provision medium.

According to another aspect of the present invention, the monitoring the download of the software update data comprises monitoring a process rate of downloading the software update data, a reception error associated with a received portion of the software update data which is extracted from the broadcasting signal, and a power interruption of the broadcasting signal receiving device which occurs before the download of the software update information is completed, and determining that the download is abnormally performed if the reception error of the received portion of the software update data is generated or the power interruption of the broadcasting signal receiving device occurs during the download.

According to another aspect of the present invention, the obtaining the software update data comprises receiving an undownloaded portion of the software update data, which was not correctly received among the software update data extracted from the broadcasting signal, from the at least one other provision medium which is accessed, based on the process rate of download of the software update data that is monitored.

According to another aspect of the present invention, the broadcasting signal receiving device may be one of a digital television, a set-top box, and a digital video recorder.

According to another aspect of the present invention, the download of the software update data comprises assembling a plurality of portions of the software update data, which are separately received and assembled as a single image of the software update data, and the single image of the software update is executed by the broadcasting signal receiving device.

According to another aspect of the present invention, a digital broadcasting system is provided, comprising a broadcasting base station which transmits a broadcasting signal that includes software update data and medium information of at least one provision medium other than the broadcasting base station, the at least one provision medium providing the software update data included in the broadcasting signal in response to the medium information; and a broadcasting signal receiving device which comprises a receiver that receives the broadcasting signal which is transmitted by the broadcasting base station, an information determiner which determines whether the broadcasting signal includes the software update data which corresponds to the broadcasting signal receiving device, an information extractor which extracts the software update data and the medium information if the software update data is determined to correspond to the broadcasting signal receiving device, a storage part which stores the medium information that is extracted, a download performer which initiates a download of the software update data that is extracted, and a controller which determines whether the download of the software update data is abnormally performed and obtains the software update data from the at least one other provision medium by using the medium information which is stored if the download of the software update data is determined to be abnormally performed.

According to another aspect of the present invention, the information determiner determines whether the broadcasting signal includes the software update data which corresponds to the broadcasting signal receiving device based on service information which is included in the broadcasting signal that is received, and determines a type of the software update data which is included in the broadcasting signal based on the service information if the software update data is determined to correspond to the broadcasting signal receiving device.

According to another aspect of the present invention, the information extractor of the broadcasting signal receiving device extracts the software update data and the medium information which accesses the at least one other provision medium that provides the software, based on the type of the software update data determined by the information determiner.

According to another aspect of the present invention, the controller comprises a monitoring part which monitors the download of the software update data, and an exception processor which accesses the at least one other provision medium that provides the software update data other than the broadcasting base station by using the medium information which is stored in the storage part if the download which is monitored by the monitoring part is abnormally performed, and receives the software update data from the at least one other provision medium which is accessed and stores the software update data which is received.

According to another aspect of the present invention, the monitoring part provides the exception processor with a process rate of downloading the software update data, and a monitoring signal that indicates whether a reception error associated with a received portion of the software update data which is extracted from the broadcasting signal is generated and whether a power interruption of the broadcasting signal receiving device occurs before the download of the software update information is completed, and the exception processor determines that the download is abnormally performed if the reception error of the received portion of the software update data is generated or the power interruption of the broadcasting signal receiving device occurs during the download, based on the monitoring signal from the monitoring part.

According to another aspect of the present invention, the exception processor receives an undownloaded portion of the software update data, which was not correctly received among the software update data extracted from the broadcasting signal, from the at least one other provision medium based on the process rate of the download of the software update data which is monitored by the monitoring part.

According to another aspect of the present invention, there is provided a software downloading method of a broadcasting signal receiving device, the method comprising receiving, from a broadcasting base station, a broadcasting signal that includes software update data; determining whether the software update data which is included in the broadcasting signal corresponds to the broadcasting signal receiving device; extracting, from the broadcasting signal, the software update data if the software update data is determined to correspond to the broadcasting signal receiving device; initiating a download of the software update data which is extracted; generating downloading reception information during the download of the software update data that is initiated; determining whether the download of the software update data is abnormally performed; and transmitting, to the broadcasting base station, downloading error information based on the downloading reception information which is generated, through a return channel if the download of the software update data is determined to be abnormally performed.

According to another aspect of the present invention, the extracting the software update data comprises determining whether the software update data which is included in the broadcasting signal corresponds to the broadcasting signal receiving device based on service information which is included in the broadcasting signal that is received; determining a type of the software update data included in the broadcasting signal based on the service information if the software update data is determined to correspond to the broadcasting signal receiving device; and extracting the software update data by the broadcasting signal receiving device among the software included in the broadcasting signal which corresponds to the type of the software update data that is determined.

According to another aspect of the present invention, the generating the downloading reception information generating supplier information comprising a type of a provision medium which provides the broadcasting signal which includes the software update data and date/time information which indicates a time or date of providing the software update data, reception path information which indicates a path of receiving the software update data from a supplier and type/version information which indicates a type or version of the software update data.

According to another aspect of the present invention, the determining whether the download of the software update data is abnormally performed comprises monitoring a process rate of downloading the software update data, a reception error associated with a received portion of the software update data which is extracted from the broadcasting signal, and a power interruption of the broadcasting signal receiving device that occurs before the download of the software update data is completed, and determining that the download is abnormally performed if the reception error associated with the received portion of the software update data is detected or the power interruption of the broadcasting signal receiving device occurs during the download of the software update data.

According to another aspect of the present invention, the return channel comprises a transmission path that transmits the download error information to the supplier of the software update data which is determined from the supplier information and the reception path information of the downloading reception information.

According to another aspect of the present invention, the downloading error information comprises at least one of the type/version information and the date/time information of the software update data based on the downloading reception information, and the process rate of download of the software update data based on whether the download of the software update data is determined to be abnormally performed.

According to another aspect of the present invention, the transmitting the downloading error information through the return channel comprises generating the downloading error information if the download is determined to be abnormally performed, and transmitting the downloading error information which is generated to the broadcasting base station as the supplier of the software which is determined by the supplier information and the reception path information of the downloading reception information, through the return channel.

The foregoing and/or other aspects of the present invention may also be achieved by providing a broadcasting signal receiving device which comprises a receiver which receives a broadcasting signal that includes software update data from a broadcasting base station, an information determiner which determines whether the broadcasting signal includes the software update data which corresponds to the broadcasting signal receiving device; an information extractor which extracts the software update data which corresponds to the broadcasting signal receiving device from the broadcasting signal if the information determiner determines that software update data which corresponds to the broadcasting signal receiving device is included in the broadcasting signal; a download performer which initiates a download of the software update data that is extracted; and a controller which generates downloading reception information during the download of the software update data that is initiated, determines whether the download of the software update data is abnormally performed, and transmits, to the broadcasting base station, downloading error information based on the downloading reception information which is generated if the download of the software update data is determined to be abnormally performed, through a predetermined return channel.

According to another aspect of the present invention, the information extractor extracts the software update data based on the type of the update software which is determined by the information determiner.

According to another aspect of the present invention, the controller comprises a monitoring part which monitors the download of the software update data, a reception information generator which generates the downloading reception information based on the service information of the broadcasting signal, an exception processor which generates the downloading error information based on the downloading reception information which is generated by the reception information generator and a return channel transmitter which transmits the downloading error information to the broadcasting base station through the return channel.

According to another aspect of the present invention, the monitoring part monitors a process rate of downloading the software, a reception error associated with a received portion of the software update data which is extracted from the broadcasting signal, and a power interruption of the broadcasting signal receiving device which occurs before the download of the software update data is completed, and determines that the assembly is abnormally performed if the reception error associated with the received portion of the software update data is generated or the power interruption of the broadcasting signal receiving device occurs during the download of the software update data.

According to another aspect of the present invention, the reception information generator generates the downloading reception information, which comprises supplier information comprising a type of a provision medium which provides the broadcasting signal which includes the software update data and date/time information which indicates a time or date of providing the software update data, reception path information which indicates a path of receiving the software from a supplier and type/version information which indicates a type or version of the software update data.

According to another aspect of the present invention, the exception processor generates the downloading error information which comprises at least one of the type/version information and the date/time information of the software update data based on the downloading reception information, and the process rate of download of the software update data based on whether the download of the software update data is determined to be abnormally performed.

According to another aspect of the present invention, the return channel comprises a transmission path which provides the downloading error information to the supplier of the software update data determined by the supplier information and the reception path information of the downloading reception information.

Embodiments of the present invention will now be described, by way of example, with reference to the accompanying drawings, in which:
Figure 1 is a control block diagram of a digital broadcasting system according to an embodiment of the present invention;
Figure 2 is a control flowchart of a software downloading method of the digital broadcasting system according to an embodiment of the present invention;
Figure 3 is a control block diagram of a digital TV according to an embodiment of the present invention; and
Figure 4 is a control flowchart of the software downloading method of the digital TV according to an embodiment of the present invention.

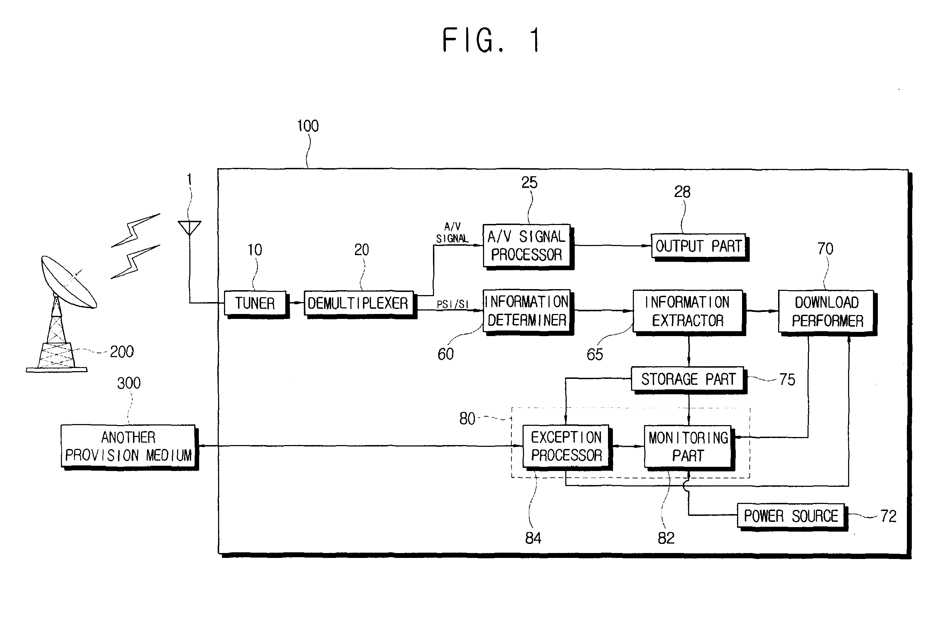

Figure 1 is a control block diagram of a digital broadcasting system according to an embodiment of the present invention. As shown therein, the digital broadcasting system comprises a digital TV 100 and a broadcasting base station 200. In the embodiment, digital TV 100 is a broadcasting signal receiving device that receives the broadcasting signal from broadcasting base station 100. However, it is understood that the principles described herein are likewise applicable to other receiving devices, such as a set-top box or digital video recorder (DVR).

The broadcasting base station 200 converts video and audio signals into digital signals to be supplied to the digital TV 100, unlike in a method of providing an analog broadcasting signal in which digital conversion is not performed. Then, the broadcasting base station 200 compresses the digital signals and packetizes them to be transmitted as a transport stream. Also, the broadcasting base station 200 includes information such as program specific information (PSI), service information (SI) and EPG information, and various software updates, in the transport stream. At this time, the broadcasting base station 200 transmits the various software according to a protocol, such as the digital storage media command & control (DSM-CC) protocol. The broadcasting base station 200 divides the software into binary data (hereinafter, to be referred to as software information) suitable for inclusion in the transport stream.

The broadcasting base station 200 according to an embodiment of the present invention adds medium information, which allows access to another provision medium that provides the software, to the transport stream (i.e., the broadcasting signal to be transmitted to the digital TV 100). The broadcasting base station 200 may add the medium information to the PSI/SI information of the broadcasting signal that is transmitted to the digital TV 100.

The medium information refers to information which allows an access to another provision medium, other than the broadcasting base station 200, that provides the software. The medium information may include uniform resource locator (URL) information to access an Internet site that provides the software; modem number information to access a modem server that provides the software; and password information to access a USB card that provides the software.

The digital TV 100 comprises an antenna 1, a tuner 10, a demultiplexer 20, an A/V signal processor 25, an output part 28, an information determiner 60, an information extractor 65, a download performer 70, a power source 72, a storage part 75 and a controller 80.

The tuner 10 tunes the broadcasting signal received through the antenna 1 into a broadcasting signal in a frequency band corresponding to a predetermined tuning control signal. The tuned broadcasting signal of a certain channel may be output as the transport stream by a vestigial sideband demodulator, such as an 8-VSB demodulator (not shown), through VSB demodulation and error correction processes.

The demultiplexer 20 divides the broadcasting signal output as the transport stream by the 8-VSB demodulator (not shown) into information such as the audio signal, the video signal and the PSI/SI, to output the divided signal as a bit-stream.

The A/V signal processor 25 processes the audio and video signals that are output as the bit-stream from the demultiplexer 20, as types to be provided to viewers through the output part 28 corresponding to the respective signals. The A/V signal processor 25 may comprise a video decoder (not shown) and a scaler (not shown) to process the video signal, and an audio decoder (not shown) to process the audio signal.

The output part 28 outputs video and sound according to the audio and video signals that are processed by the A/V signal processor 25 and provided to viewers. The output part 28 may comprise a display part (not shown) and a speaker (not shown).

The various information included in the PSI/SI divided by the demultiplexer 20 is stored in a predetermined memory (not shown) by data table. Among the information, picture display information is processed through the A/V signal processor 25 according to a predetermined control to be output to the output part 28 after being combined with the currently-tuned A/V signal.

Here, the information determiner 60 determines whether the software update data exists in the currently-tuned broadcasting signal, based on the service information included in the PSI/SI of the received broadcasting signal. If the software update data is determined to exist in the received broadcasting signal, the information determiner 60 determines valid software update data for the digital TV 100 through information according to the DSM-CC protocol from the PSI/SI, i.e., the type of the software included in the received broadcasting signal.

Here, the valid software may comprise software update data in consideration of a model group, specification and an updated version of the corresponding software of the digital TV 100.

The information extractor 65 extracts the software determined as the valid software by the information determiner 60 from the transport stream of the currently-tuned broadcasting signal. The information extractor 65 extracts the valid software from the transport stream and at the same time extracts the medium information included in the PSI/SI. The information extractor 65 may extract the medium information alone which may access another provision medium that provides the valid software determined by the information determiner 60 from among the software received through the currently-tuned broadcasting signal.

Here, the information extractor 65 fully extracts the divided software information divided into the binary data (hereinafter, to be referred to as software information) suitable for being included in the transport stream and transmitted from the broadcasting base station 200, thereby extracting the valid software as a single image by collecting the divided software information.

The storage part 75 stores the medium information extracted from the PSI/SI by the information extractor 65.

The download performer 70 downloads the valid software extracted by the information extractor 65. That is, the download performer 70 downloads the divided software information extracted from the transport stream of the currently-tuned broadcasting signal by the information extractor 65, thereby generating the valid software by assembling the divided software information to provide a single image of the valid software.

The controller 80 monitors a downloading state of the valid software, and obtains the valid software by using the medium information prestored in the storage part 75 if the downloading is performed abnormally. The controller 80 comprises a monitoring part 82 which monitors the download state of the valid software; and an exception processor 84 which accesses another provision medium 300 providing the valid software other than the broadcasting base station 200 by using the medium information prestored in the storage part 75 if the monitoring part 82 determines that the operation of downloading the valid software is performed abnormally, and receives the valid software from the accessed provision medium 300 to be downloaded by the download performer 70.

Here, another provision medium 300 provides the valid software. Another provision medium 300 may comprise an Internet server, a modem server or a USB card.

The monitoring part 82 monitors a process rate of the downloading operation of the valid software that is performed by the download performer 70. Also, the monitoring part 82 provides the exception processor 84 with a monitoring signal which corresponds to monitoring an error of the divided software information of the download of the valid software, interruption of the power source 72 of the digital TV 100 before the operation of downloading the valid software is completed, and various error conditions under which the downloading operation is performed abnormally, such as an abnormal reception of the valid software due to lowered reception sensitivity of the broadcasting signal.

The exception processor 84 determines that the downloading operation is performed abnormally, on the basis of the monitoring signal from the monitoring part 82 if the error conditions are generated, such as an error of the divided software information of the valid software or a turn-off of the power source 72 during the downloading operation. If the exception processor 84 determines that the downloading operation is performed abnormally, it accesses another provision medium 300 that provides the valid software, other than the broadcasting base station 200, by using the medium information prestored in the storage part 75 and the valid software is then obtained from the accessed provision medium 300 to be downloaded to the download performer 70.

When obtaining the valid software from another provision medium 300, the exception processor 84 may receive only software information that was not properly received among the divided software information of the valid software to be downloaded by the download performer 70, based on the process rate of downloading the valid software that is monitored by the monitoring part 82.

The exception processor 84 comprises a configuration of obtaining the valid software received from another provision medium 300 to the download performer 70 by accessing another provision medium 300. As an example of the configuration, the exception processor 84 may comprise a LAN card (not shown) to access the Internet, a modem card (not shown) to access a modem server, a USB access part to which a USB card makes an access and a controller which communicates with another provision medium 300 through the LAN card (not shown), the modem card (not shown) and the USB access part (not shown).

If the operation of downloading the valid software is completed normally, the digital TV 100 boots the system by using the downloaded valid software if the system is rebooted after the completion of the downloading operation, thereby updating the system with the valid software.

As described above, the digital broadcasting system according to an embodiment of the present invention accesses another provision medium 300 and downloads the software if the downloading operation is not performed normally, thereby overcoming the limitation of the conventional art which does not actively deal with software updates downloaded abnormally.

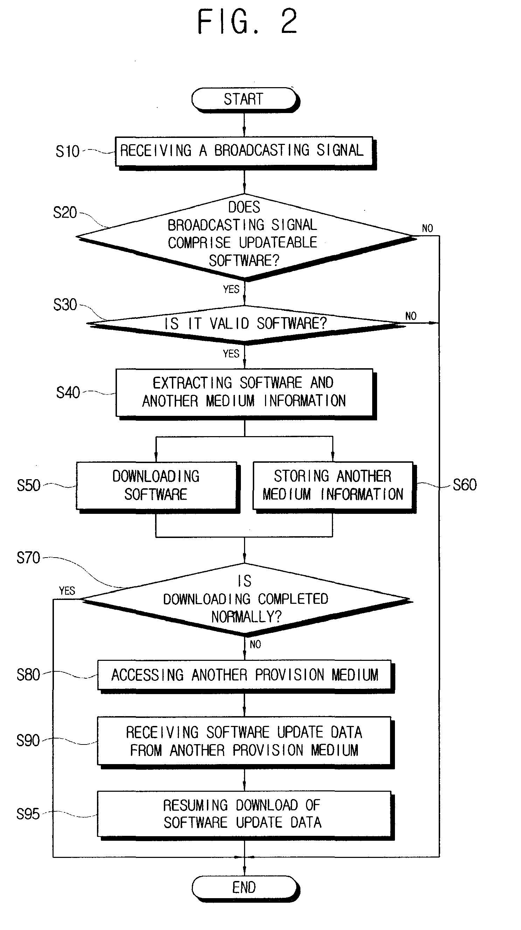

Referring to Figure 2, a software receiving method of the digital broadcasting system according to an embodiment of the present invention will be described.

First, the digital TV 100 receives the broadcasting signal that is transmitted from the broadcasting base station 200 at operation S10. Here, the broadcasting base station 200 converts the video and audio signals into the digital signals to transmit them as the transport stream after compression and packetization. The broadcasting base station 200 adds the PSI/SI, comprising the medium information and the various software to be updated, to the transport stream to be transmitted. Then, the information determiner 60 determines whether the updateable software exists in the currently-tuned broadcasting signal, based on the information included in the PSI/SI of the received broadcasting signal at operation S20. If software update data is determined to exist in the received broadcasting signal, the information determiner 60 determines whether the software update data is valid for the digital TV 100 through the information according to the DSM-CC protocol, i.e., the types of the software included in the received broadcasting signal at operation S30. Here, the valid software comprises software suitable for updating the digital TV 100 in consideration of the model group, specification and the version of the corresponding prestored software of the digital TV 100. If a valid software update is determined to exist in the received broadcasting signal, the information extractor 65 extracts the software update determined as the valid software update data from the transport stream of the currently-tuned broadcasting signal, and the medium information included in the PSI/SI at operation S40. The information extractor 65 may extract only the medium information accessible to another provision medium 300 that provides the valid software determined by the information determiner 60 from among the software received through the currently-tuned broadcasting signal, from the PSI/SI.

The download performer 70 downloads the extracted valid software at operation S50. The extracted medium information is stored in the storage part 75 at operation S60. Here, the download performer 70 assembles the divided software information extracted by the information extractor 65 to generate the valid software to be updateable as the single image. The monitoring part 82 continuously monitors the operation of the download performer 70 downloading the divided software information of the valid software. Specifically, the monitoring part 82 monitors the process rate of downloading the valid software. Also, the monitoring part 82 monitors errors of the divided software information of the downloaded valid software, the turn-off of the power source 72 of the digital TV 100 before the operation of downloading the valid software is completed, and the various error conditions under which the downloading operation is performed abnormally, such as the abnormal reception of the valid software due to the lowered reception sensitivity of the broadcasting signal. Then, the exception processor 84 determines whether the operation of downloading the extracted valid software is completed normally at operation S70. That is, the exception processor 84 determines that the operation of downloading the valid software is performed abnormally if the error conditions are generated such as an error in the divided software information of the valid software or the turn-off of the power source 72 during downloading of the divided software information, based on the monitoring signal generated by the monitoring part 82. If determined that the download is performed abnormally at operation S70, the exception processor 84 accesses another provision medium 300 by using the medium information prestored in the storage part 75 at operation S80. At this time, the other accessed provision medium 300 provides the valid software. The exception processor 84 resumes downloading the valid software from the accessed provision medium 300 at operation S90, and makes the download performer 70 download the valid software received from medium 300 at operation S95. When the exception processor 84 receives the valid software at operation S90, it receives the undownloaded software information of the divided software information of the valid software, from another provision medium 300 based on the process rate monitored by the monitoring part 82, and resumes downloading of the software information which was not properly downloaded by the download performer 70.

As described above, the software downloading method of the digital broadcasting system according to an embodiment of the present invention overcomes the limitation of the conventional art which does not actively deal with the software updates, by accessing another provision medium 300 and by re-downloading the software that failed to be downloaded if the downloading operation is not performed normally.

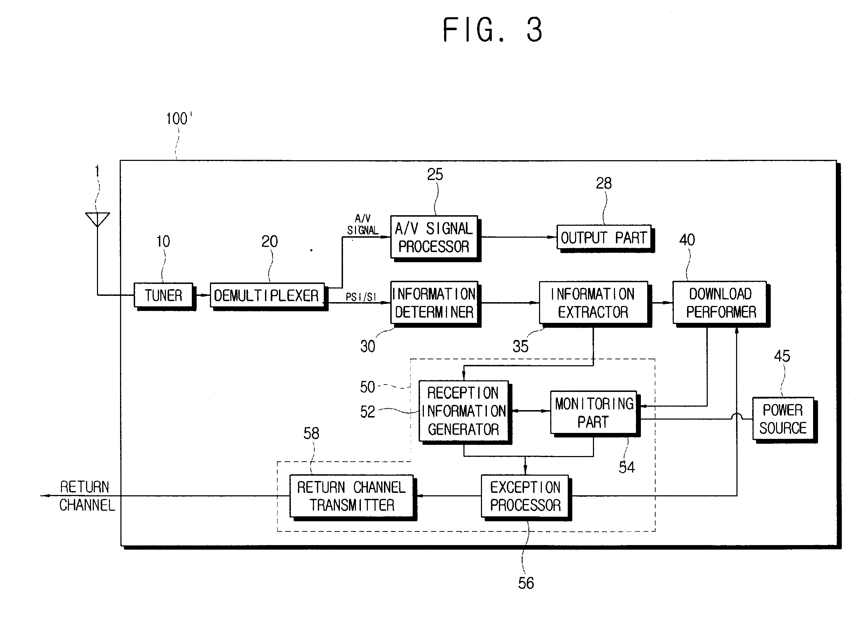

Referring to Figure 3, a digital TV 100' according to an embodiment of the present invention will be described.

The digital TV 100' according to an embodiment of the present invention comprises an antenna 1, a tuner 10, a demultiplexer 20, an A/V signal processor 25, an output part 28, an information determiner 30, an information extractor 35, a download performer 40, a power source 45 and a controller 50. Here, a broadcasting base station (not shown) which provides a broadcasting signal that is transmitted to the digital TV 100' supports a general digital broadcast which does not provide medium information from the broadcasting base station 200 in Figure 1.

The description of the antenna 1, the tuner 10, the demultiplexer 20, the A/V signal processor 25 and the output part 28 will be avoided as it is the same as that in the digital TV 100 of the digital broadcasting system according to the embodiment of the present invention depicted in Figure 1.

The information determiner 30 determines whether software update data exists in a currently-tuned broadcasting signal, based on information included in PSI/SI of a received broadcasting signal. The information determiner 30 determines valid software update data that corresponds to the digital TV 100' through information according to a DSM CC protocol from the PSI/SI, i.e., a type of the software included in the received broadcasting signal, if the information determiner 30 determines that the software update data exists in the received broadcasting signal. Here, the valid software comprises software update data that is determined in consideration with a model group, specification and a updated version of the corresponding software of the digital TV 100'.

The information extractor 35 extracts the software determined as the valid software from the transport stream of the currently-tuned broadcasting signal. Here, the information extractor 65 fully extracts the divided software information divided into binary data (hereinafter, to be referred to as software information) suitable for being included in the transport stream and transmitted from the broadcasting base station (not shown), thereby extracting the valid software as a single image by collecting the divided software information.

The download performer 40 downloads the valid software extracted by the information extractor 35. That is, the download performer 40 downloads the divided software information extracted from the transport stream of the currently-tuned broadcasting signal by the information extractor 35, thereby generating the valid software update data by assembling the divided software update data to provide a single image of the valid software.

If the operation of downloading the valid software is completed normally, the digital TV 100' boots the system by using the prestored valid software if the system is reboot after the completion of the downloading operation, thereby updating the system through the valid software.

The controller 50 generates download reception information and monitors a downloading state of the valid software when the valid software is downloaded from the extracted software information. If the operation of downloading the valid software is performed abnormally, the controller 50 provides downloading error information based on the download reception information and monitoring result information on the downloading state, to the broadcasting base station (not shown) through a predetermined return channel.

The controller 50 comprises a monitoring part 54 to monitor the downloading state of the valid software; a reception information generator 52 to generate the download reception information based on information included in the PSI/SI of the received broadcasting signal; an exception processor 56 which generates the downloading error information based on the download reception information generated by the reception information generator 52 and the downloading monitoring result information generated by the monitoring part 54; and a return channel transmitter 58 which transmits the downloading error information to the broadcasting base station (not shown) through the predetermined return channel.

The monitoring part 54 monitors the process rate of downloading the valid software performed by the download performer 40. Also, the monitoring part 54 provides the exception processor 56 with a monitoring result signal which corresponds to detection of errors of the divided software information of the downloaded valid software, interruption of a power source 45 of the digital TV 100' before the downloading operation of the valid software is completed, and various error conditions under which the downloading of the software is performed abnormally, such as an abnormal reception of the valid software due to a lowered reception sensitivity of the broadcasting signal.

The reception information generator 52 generates supplier information which comprises a type of a provision medium (e.g., Seoul Broadcasting base station, as a terrestrial broadcasting station, not shown) providing a broadcasting signal having the valid software to be downloaded and date/time information providing the valid software; reception path information which receives the valid software from a supplier (e.g., Seoul Broadcasting base station, not shown); and download reception information which comprises the type/version information of the downloaded valid update information. The download reception information is needed to re-request the valid software which was being downloaded, if the downloading of the software fails. The downloading of reception information may include information on the type of the software, the downloading method, and the supplier.

The exception processor 56 determines that the downloading operation is performed abnormally if error conditions are generated, such as an error of the divided software information of the valid software or the interruption of the power source 45 of the digital TV during the downloading operation, based on the monitoring result signal from the monitoring part 54. If the operation of downloading the valid software that is extracted is determined to be performed abnormally, the exception processor 56 generates the downloading error information, which is supplied to the return channel transmitter 58.

The downloading error information may include at least one of the type/version information of the valid software based on the downloading reception information generated by the reception information generator 52, the date/time information of providing the valid software, the process rate of downloading the valid software based on the monitoring result signal generated by the monitoring part 54, and failure factor information on the abnormal downloading operation.

The return channel transmitter 58 provides the downloading error information from the exception processor 56 to the broadcasting base station (not shown) through the predetermined return channel. Here, the return channel may be a preset transmission path that provides the downloading error information to a supplier of the valid software that is determined through the supplier information and the reception path information of the downloading reception information generated by the reception information generator 52. Thus, the return channel transmitter 58 may determine the supplier (e.g., Seoul Broadcasting base station, not shown) of the valid software that is being downloaded through the supplier information and the reception path information of the download reception information generated by the reception information generator 52 and provides the supplier with the downloading error information through the return channel, which is the preset transmission path.

The return channel may vary including a broadcasting network as long as it provides the downloading error information to the supplier (broadcasting base station) supplying the broadcasting signal including the valid software.

If the digital TV 100' according to an embodiment of the present invention supplies the downloading error information to the broadcasting base station (not shown), the broadcasting base station (not shown) analyzes the downloading error information, addresses the factor causing the abnormal downloading operation, and re-supplies the corresponding valid software to the digital TV 100' or informs the path to re-download the corresponding valid software update to the digital TV 100'.

Then, the digital TV 100' instructs the download performer 40 to download the re-received valid software. When re-receiving the valid software, the digital TV 100' may only download the un-downloaded software information from among the divided software information of the valid software, based on the process rate of downloading the valid software.

Also, the broadcasting base station (not shown) may re-supply the un-downloaded software information from among the divided software information of the valid software to the digital TV 100', based on the process rate of downloading the downloading error information.

As described above, the digital TV 100' according to an embodiment of the present invention overcomes the limitation of the conventional art which does not actively deal with the abnormal downloading operation and supplies the downloading error information to the supplier so as to re-transmit the valid software if the downloading operation is not normally performed, thereby downloading the software update normally.

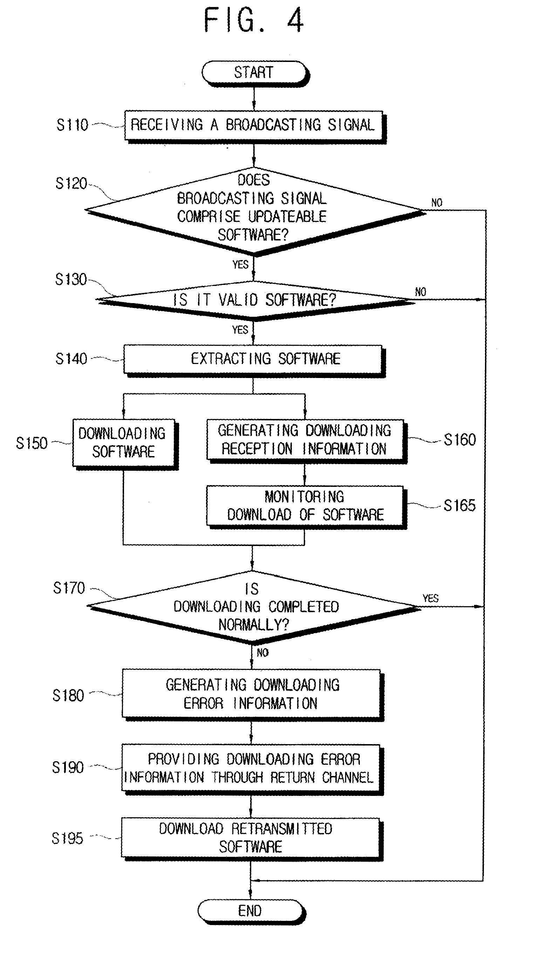

With this configuration, an embodiment of a software downloading method of the digital TV 100' will be described with reference to Figure 4.

First, the digital TV 100' receives the broadcasting signal from the broadcasting base station (not shown) at operation S110. Here, the broadcasting base station (not shown) converts video and audio signals into digital signals to transmit them as the transport stream after compression and packetization of the digital signals. Also, the broadcasting base station 200 adds the PSI/SI and various software updates to the transport stream to be transmitted.

Then, the information determiner 30 determines whether software update data exists in the currently-tuned broadcasting signal based on the service information included in the PSI/SI of the received broadcasting signal at operation S120. If software update data is determined to exist in the received broadcasting signal, the information determiner 30 determines the software update data to be valid for the digital TV 100' through the information according to the DSM-CC protocol from the PSI/SI, i.e., the type of the software included in the received broadcasting signal at operation S130. If valid software is determined to exist in the received broadcasting signal, the information extractor 35 extracts the valid software from the transport stream of the currently-tuned broadcasting signal at operation S140.

Then, the download performer 40 downloads the extracted valid software at operation S150. At the same time, the reception information generator 52 may generate the download reception information based on the service information included in the PSI/SI of the received broadcasting signal at operation S160. The download reception information may the supplier information including the type of the provision medium (e.g., Seoul Broadcasting base station, as a terrestrial broadcasting station, not shown) that provides the broadcasting signal comprising the valid software to be downloaded and the date/time information of providing the valid software, the reception path information receiving the valid software from a supplier, and the type/version information of the downloaded valid software.

Meanwhile, the monitoring part 54 continuously monitors the download performer 40 that downloads the divided software information of the valid software at operation S165. Specifically, the monitoring part 54 monitors the process rate of downloading the valid software. Also, the monitoring part 54 monitors errors of the divided software information of the downloaded valid software, the interruption of the power source 45 of the digital TV 100' before the operation of downloading the valid software is completed, and the various error conditions under which the downloading of the extracted software information is performed abnormally, such as the abnormal reception of the valid software due to the lowered reception sensitivity of the broadcasting signal. The exception processor 56 determines whether the operation of downloading the valid software is completed normally at operation S170. That is, the exception processor 56 determines that the operation of downloading the valid software is performed abnormally if the error conditions are generated such as the error of the divided software information of the valid software or the interruption of the power source 45 during the downloading of the software information, based on the monitoring result signal generated by monitoring of the monitoring part 54. If the downloading is determined to be performed abnormally at operation S170, the exception processor 56 generates the downloading error information at operation S180 to be supplied to the return channel transmitter 58. Then, the return channel transmitter 58 determines the supplier (Seoul Broadcasting base station, not shown) of the valid software update being downloaded through supplier information and the reception path information of the download reception information generated by the reception information generator 52, and provides the supplier with the downloading error information through the return channel, which is a preset transmission path, at operation S190.

The downloading error information may include at least one of the type/version information of the valid software based on the download reception information generated by the reception information generator 52, the date/time information of providing the valid software, the process rate of downloading the valid software based on the monitoring result signal generated by the monitoring part 54, and the failure factor information on the abnormal downloading operation.

The broadcasting base station (not shown) receiving the downloading error information from the digital TV 100' analyzes the downloading error information, addresses the factor by which the downloading operation is abnormally performed, and retransmits the corresponding valid software to the digital TV 100' or informs the path through which the corresponding valid software is re-downloaded to the digital TV 100'.

The digital TV 100' instructs the download performer 40 to download the retransmitted valid software at operation S195. Here, when re-receiving the valid software, the digital TV 100' downloads the un-downloaded software information from among the divided software information of the valid software based on the process rate of downloading the valid software, or the broadcasting base station (not shown) re-supplies the un-downloaded software information to the digital TV 100' from among the divided software information of the valid software based on the downloading process rate of the downloading error information, thereby resuming downloading of the software information that failed to be downloaded by the download performer 40.

As described above, in the software downloading method of the digital TV 100' according to an embodiment of the present invention, the downloading error information for re-transmitting the valid software is generated to be supplied to the supplier, thereby overcoming the limitation of the conventional art which does not actively deal with abnormally downloaded software updates.

A computer program for causing a digital TV 100, 100' to operate according to aspects of the present invention may be stored in ROM/RAM (not shown) in the digital TV 100, 100'. The computer program may be received by the digital TV 100, 100' in a broadcast signal as software, or may be loaded into the ROM from an internet connection, or external storage means such as a floppy disk, USB storage device, CD-ROM or the like. The instructions, once loaded stored in the ROM/RAM may be run executed by a processor (not shown) for causing the digital TV 100,100' to operate as described above.

Thus, aspects of the present invention provide a software downloading method of a digital broadcasting system which normally downloads a software through other reception paths if an operation of downloading the software update through a broadcasting signal is not performed normally, a digital TV and a software update downloading method thereof.

Although a few embodiments of the present invention have been shown and described, it will be appreciated by those skilled in the art that changes may be made in these embodiments without departing from the principles of the invention, the scope of which is defined in the appended claims and their equivalents.

## Claims

1. A method of downloading software for a broadcasting signal receiving device (100, 100'), the method comprising:
receiving from a broadcasting base station (200) a broadcasting signal that includes software;
determining whether the software which is included in the broadcasting signal corresponds to the broadcasting signal receiving device;
extracting the software from the broadcast signal if it is determined to correspond to the broadcasting signal receiving device, whereby to provide a download of the software;
determining whether the download of the software is performed abnormally; and
arranging a further download of at least part of the software if the software is downloaded abnormally.

2. A method according to claim 1 wherein the software comprises update software for updating the broadcast signal receiving device.

3. A method according to claim 1 or claim 2 in which the broadcast signal further comprises medium information for at least one software provision medium (300) other than the broadcasting base station (200), the method further comprising:
extracting the medium information from the broadcast signal and storing it if the software is determined to correspond to the broadcast signal receiving device (100, 100'); and
obtaining the software from the at least one other provision medium (300) by using the stored medium information if the download of the software is determined to be abnormally performed.

4. A method according to claim 3, wherein the medium information comprises at least one of uniform resource locator (URL) information of an Internet site which can provide the software, modem number information of a modem server which can provide the software, and password information which accesses a USB card which can provide the software.

5. A method according to claim 4, comprising monitoring the download of the software, accessing the at least one other provision medium (300) which provides the software other than the broadcasting base station (200) by using the medium information which is stored if the download of the software which is monitored is determined to be abnormally performed, and receiving the software from the at least one other provision medium (300) which is accessed and storing the software which is received from the at least one other provision medium (300).

6. A method according to claim 5, wherein the obtaining of the software comprises receiving an undownloaded portion of the software, which was not correctly received among the software extracted from the broadcasting signal, from the at least one other provision medium (300) which is accessed, based on the process rate of download of the software that is monitored.

7. A method according to claim 1 or claim 2, comprising:
generating download reception information during the download of the software; and
transmitting to the broadcasting base station (200), downloading error information based on the download reception information which is generated, through a return channel, if the download of the software is determined to be performed abnormally.

8. A method according to claim 7, wherein the generating of the download reception information comprises generating supplier information comprising a type of a provision medium which provides the broadcasting signal which includes the software and date/time information which indicates a time or date of providing the software, reception path information which indicates a path of receiving the software from a supplier and type/version information which indicates a type or version of the software.

9. A method according to claim 8, wherein the return channel comprises a transmission path that transmits the downloading error information to the supplier of the software which is determined from the supplier information and the reception path information of the download reception information.

10. A method according to claim 9, wherein the downloading error information comprises at least one of the type/version information and the date/time information of the software based on the download reception information, and the process rate of download of the software based on whether the download of the software is determined to be abnormally performed.

11. A method according to claim 10, wherein the transmitting of the downloading error information through the return channel comprises generating the downloading error information if the download is determined to be performed abnormally, and transmitting the downloading error information which is generated to the broadcasting base station (200) as the supplier of the software which is determined by the supplier information and the reception path information of the download reception information, through the return channel.

12. A method according to any one of claims 7 to 11 further comprising re-receiving the software from the broadcasting station (200).

13. A method according to any preceding claim, in which the determination as to whether the software which is included in the broadcasting signal corresponds to the broadcasting signal receiving device (100, 100') is based on service information which is included in the broadcasting signal;
a type of the software included in the broadcasting signal is determined based on the service information if the software is determined to correspond to the broadcasting signal receiving device (100, 100'); and
software corresponding to the type of the software that is determined is extracted from the broadcast signal.

14. A method according to claim any preceding claim, wherein the monitoring of the download of the software comprises monitoring a process rate of downloading the software, a reception error associated with a received portion of the software which is extracted from the broadcasting signal, and a power interruption of the broadcasting signal receiving device which occurs before the download of the software is completed, and determining that the download is performed abnormally if the reception error associated with the received portion of the software is detected or the power interruption of the broadcasting signal receiving device occurs during the download of the software.

15. A method according to any preceding claim, wherein the broadcasting signal receiving device (100, 100') is one of a digital television, a set-top box, and a digital video recorder.

16. A method according to any preceding claim, wherein the download of the software comprises assembling a plurality of portions of the software, which are separately received and assembled as a single image of the software, and the single image of the software is executed by the broadcasting signal receiving device (100, 100').

17. A method of providing software to a broadcast signal receiving device (100, 100') in a broadcast system, comprising transmitting from a broadcasting base station (200) a broadcasting signal which includes software, in which the broadcast signal receiving device is arranged to perform the method of any of claims 1 to 16.

18. A broadcasting signal receiving device (100, 100') comprising:
a receiver (1) for receiving the broadcasting signal which is transmitted by the broadcasting base station;
means (60) for determining whether the broadcasting signal includes the software which corresponds to the broadcasting signal receiving device (100, 100');
means (35, 65) for extracting the software if it is determined to correspond to the broadcasting signal receiving device whereby to provide a download of the software;
a controller (50, 80) for determining whether the download of the software is performed abnormally;
wherein the device is operable to arrange a further download of at least part of the software if the software is downloaded abnormally.

19. A device according to claim 18 wherein the software comprises update software for updating the broadcast signal receiving device (100, 100').

20. A device according to claim 18 or claim 19 wherein the broadcast signal further comprises medium information for at least one software provision medium other than the broadcasting base station, the device further arranged to:
extract the medium information from the broadcast signal and store it in a storage means (75) if the software is determined to correspond to the broadcast signal receiving device;
obtain the software from the at least one other provision medium (300) by using the stored medium information if the download of the data is determined to be abnormally performed.

21. A device according to claim 20, wherein the medium information comprises at least one of uniform resource locator (URL) information of an Internet site which can provide the software, modem number information of a modem server which can provide the software, and password information which accesses a USB card which can provide the software.

22. A device according to claim 21, wherein the controller (80) comprises a monitoring means (82) for monitoring the download of the software, and an exception processor (84) for accessing the at least one other provision medium (300) that provides the software other than the broadcasting base station (200) by using the medium information which is stored in the storage means (75) if the download which is monitored by the monitoring means (82) is performed abnormally, and is arranged to receive the software from the at least one other provision medium (300) which is accessed and to store the software which is received.

23. A device according to claim 22, wherein the exception processor (84) is arranged to receive an undownloaded portion of the software, which was not correctly received from among the software extracted from the broadcasting signal, from the at least one other provision medium (300) based on the process rate of the download of the software which is monitored by the monitoring means (82).

24. A device according to claim 23, wherein the reception information generator (58) is arranged to generate the download reception information, which comprises supplier information comprising a type of a provision medium (300) which provides the broadcasting signal which includes the software and date/time information which indicates a time or date of providing the software, reception path information which indicates a path of receiving the software from a supplier and type/version information which indicates a type or version of the software.

25. A device according to claim 18 or claim 19 in which:
the controller (50) is arranged to generate download reception information during the download of the software, and to transmit to the broadcasting base station (200), downloading error information based on the download reception information which is generated if the download of the software is determined to be abnormally performed, through a predetermined return channel.

26. A device according to claim 25, wherein the controller (50) comprises a monitoring means (54) for monitoring the download of the software, a reception information generator (52) for generating the download reception information based on the service information of the broadcasting signal, an exception processor (56) for generating the downloading error information based on the download reception information which is generated by the reception information generator (52) and a return channel transmitter (58) for transmitting the downloading error information to the broadcasting base station (200) through the return channel.

27. A device according to claim 26, wherein the exception processor (56) is arranged to generate the downloading error information which comprises at least one of the type/version information and the date/time information of the software based on the download reception information, and the process rate of download of the software based on whether the download of the software is determined to be abnormally performed.

28. A device according to claim 27, wherein the return channel comprises a transmission path for providing the downloading error information to the supplier of the software determined by the supplier information and the reception path information of the downloading reception information.

29. A device according to any one of claims 25 to 28 further arranged to rereceive the software from the broadcasting station.

30. A device according to any one of claims 22 to 24 or claims 26 to 29,
wherein the monitoring means (54, 82) is arranged to provide the exception processor (56, 84) with a process rate of downloading the software, and a monitoring signal for indicating whether a reception error associated with a received portion of the software which is extracted from the broadcasting signal is generated and whether a power interruption of the device occurs before the download of the software is completed, and
the exception processor (56, 84) is arranged to determine that the download is performed abnormally if the reception error of the received portion of the software is generated or the power interruption of the device occurs during the download, based on the monitoring signal from the monitoring means (54, 82).

31. A device according to any one of claims 18 to 30, in which the determining means (30, 60) is arranged to determine whether the software which is included in the broadcasting signal corresponds to the device based on service information which is included in the broadcasting signal; and
a type of the software included in the broadcasting signal is arranged to be determined based on the service information if the software is determined to correspond to the device.

32. A device according to any one of claims 18 to 31, which is one of a digital television, a set-top box, and a digital video recorder.

33. A device according to any one of claims 18 to 32, wherein the download of the software comprises assembling a plurality of portions of the software, which are separately received and assembled as a single image of the software, and the single image of the software is executed by the device.

34. A digital broadcasting system, comprising:
a broadcasting base station (200) for transmitting a broadcasting signal that includes software; and
a broadcast signal receiving device (100, 100') according to any one of claims 18 to 33 arranged to download software transmitted by the broadcast base station (200).

35. A computer program containing executable instructions for causing a broadcast signal receiving device to be configured according to any one of claims 18 to 34 when the instructions are run on a processor for controlling the device.
